Europäisches Patentamt

European Patent Office

Office européen des brevets

(11) Publication number: **0 420 468 A2**

# EUROPEAN PATENT APPLICATION

(21) Application number: **90310158.2**

(51) Int. Cl.5: **G02B 26/08**

(22) Date of filing: **17.09.90**

(30) Priority: **25.09.89 US 411969**

(43) Date of publication of application:
**03.04.91 Bulletin 91/14**

(84) Designated Contracting States:
**DE FR GB IT NL**

(71) Applicant: **HAZELTINE CORPORATION**
**450 East Pulaski Road**
**Greenlawn New York 11740(US)**

(72) Inventor: **Freyre, Frederick W.**
**3475 Major Drive West**
**Wantagh, New York 11793(US)**

(74) Representative: **Wood, Anthony Charles et al**
**Urquhart-Dykes & Lord 91 Wimpole Street**
**London W1M 8AH(GB)**

(54) **Method and apparatus for optical signal multiplexing/demultiplexing.**

(57) A micromechanical light modulator is used to couple light signals between selected pairs of a plurality of optical fibers so as to provide multiplexing and/or demultiplexing of the light signals. The surface of the deflectable member of the micromechanical light modulator is concave, while the ends of the optical fibers face the member and lie on a circle the radius of which is substantially equal to the radius of curvature of the concave surface of the deflectable member. The degree of deflection of the member determines which pair of optical fibers is coupled.

FIG.3

# METHOD AND APPARATUS FOR OPTICAL SIGNAL MULTIPLEXING/DEMULTIPLEXING

## BACKGROUND OF THE INVENTION

This invention relates to optical multiplexing/demultiplexing generally and, more particularly, to a novel method and apparatus for optical multiplexing/demultiplexing that employs micromechanical light modulators to couple light signals between the ends of selected pairs of a plurality of optical fibers.

The operation and construction of micromechanical light modulators are described in the article "Micromechanical light modulators on silicon," by Robert E. Brooks, printed in OPTICAL ENGINEERING , January/February 1985, Vol. 24, No. 1, beginning at page 101, which article and the references cited therein are made a part hereof by reference. Basically, the micromechanical light modulator comprises a reflective metal-coated silicon dioxide "paddle" which is cantilevered over a well into which it can be deflected by an electrical charge on a substrate under the paddle. The angle of deflection is determined by the size of the charge, and a number of deflection angles can be resolved with a single paddle. An important feature of such a modulator is that it can be formed as part of an integrated circuit and a plurality of them can be disposed in high density. For example, in a 2 X 18 array described in the article, each paddle is 60 microns square, 0.6 microns thick over a 5-micron deep well, and spaced on 87.5-micron centers. Each of the paddles are electronically selectively addressable.

It is an object of the present invention to provide an optical multiplexer/demultiplexer method and apparatus which utilize micromechanical light modulators to provide excellent coupling between optical fibers.

It is another object of the invention to provide such method and apparatus which employ relatively inexpensive components.

## SUMMARY OF THE INVENTION

The present invention achieves the above objects, among others, by utilizing a micromechanical light modulator which couples light signals between selected pairs of a plurality of optical fibers so as to provide multiplexing and/or demultiplexing of light signals. The surface of the micromechanical light modulator is concave, while the ends of the optical fibers are disposed so as to lie on a circle the radius of which is substantially equal to the radius of curvature of the concave surface of the micromechanical light modulator. The degree of deflection of the micromechanical light modulator determines which pair of optical fibers is coupled.

For a better understanding of the present invention, together with other and further objects, reference is made to the following description, taken in conjunction with the accompanying drawings, and its scope will be pointed out in the appended claims.

## BRIEF DESCRIPTION OF THE DRAWINGS

Fig. 1 is an enlarged side elevation view in cross section of a micromechanical light modulator of the type useful in practicing the present invention.

Fig. 2 is a perspective view of the micromechanical light modulator of Fig. 1.

Fig. 3 is a schematic view of the micromechanical light modulator of Fig. 1 showing the spacial relationship thereto of a plurality of optical fibers, for the multiplexing/demultiplexing of light signals.

## DETAILED DESCRIPTION OF THE INVENTION

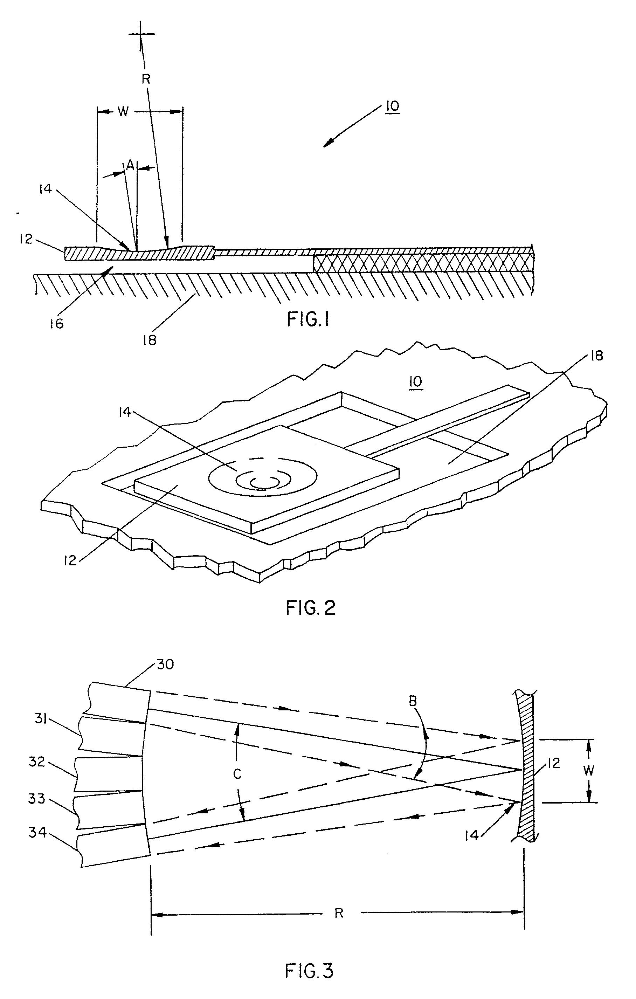

Referring to Fig. 1, there is shown a micromechanical light modulator 10, which may be generally of the type described in the above-referenced OPTICAL ENGINEERING article. Micromechanical light modulator 10 includes a deflectable mirror or "paddle" 12 having, preferably, a spherically concave portion 14, which has a radius of curvature "R", in the upper surface thereof. Member 12 extends over a well 16 and is deflectable thereinto by means of an electrical charge placed on substrate 18. The magnitude of the charge determines the degree of rotation of angle A.

Referring now to Fig. 3, there is shown an embodiment of the present invention in which optical fibers 30, 31, 32, 33, and 34 are disposed opposite concave portion 14 of member 12, of micromechanical light modulator 10 with the ends of the optical fibers lying generally on a circle whose radius is substantially equal to the radius of curvature, R, of the concave portion.

With the degree of deflection of paddle 12 shown in Fig. 3, a light signal from optical fiber 30 will be reflected from paddle 12 to optical fiber 34. If the degree of deflection of paddle 12 were less (i.e. , in effect a slight clockwise rotation of paddle 12), the light signal from optical fiber 30 could be selectively reflected to any of optical fibers 31 throught 34. In such mode of operation, the embodiment of Fig. 3 would be operating as a demultiplexer. Conversely, by selectively varying the degree of deflection of paddle 12, for example, light signals from any of optical fibers 31 through 34 might be reflected to optical fiber 30 and, thus, the embodiment of Fig. 3 would be operating as a multiplexer.

Since the light beam emitted from the end of an optical fiber tends to diverge, it is desirable that the width, W, of paddle 12 be sufficient that the entire width of the beam may be reflected and focussed by spherically concave portion 14 to converge at the receiving optical fiber so that the aperture of the transmitting optical fiber is imaged on the face of the receiving optical fiber. This relationship is defined by:
W = (beam spread angle, B, in radians) X (R). For practical sizes of optical fibers, e.g. , about 100 microns in diameter, the angle between the extreme optical fibers, C, may be in the order of about 20 degrees. With angle C = 20 degrees, the minimum angle of rotation, A, of paddle 12 is one-half that angle, or 10 degrees. With larger angles for C, the movement of paddle 12 diverges from the ideal of lying on a common circle with the ends of optical fibers 30 - 34, the effective width of the reflecting surface of paddle 12 decreases so that the entire beam may not be reflected, and the resulting astigmatism may become intolerable in some applications. To accommodate larger angles C, the size of the reflecting surface of paddle 12 should be increased.

Concave portion 14 of paddle 12 preferably has an aluminized or silvered and passivated mirror surface to prevent oxidation.

## Claims

Claim 1. An optical multiplexer/demultiplexer, comprising:
a plurality of optical fibers; and
movable reflecting means for selectively coupling a light beam from a first one of said plurality of optical fibers to a second one of said plurality of optical fibers.

Claim 2. The optical multiplexer/demultiplexer of Claim 1, wherein:
said movable reflecting means comprises an electronically deflectable member having a concave reflective portion defined in one surface thereof; and
the ends of said plurality of optical fibers are disposed so as to face said concave portion and lie generally on a circle the radius of which is substantially equal to the radius of curvature of said concave portion;
whereby, selective deflection of said member will cause said light beam to be coupled between a selected pair of said optical fibers.

Claim 3. The optical multiplexer/demultiplexer of Claim 1, wherein said movable reflecting means comprises a micromechanical light modulator.

Claim 4. A method of multiplexing/demultiplexing optical signals, comprising:
providing a plurality of optical fibers; and
selectively coupling a light beam from a first one of said plurality of optical fibers to a second one of said plurality of optical fibers by reflecting said beam.

Claim 5. The method of Claim 4 wherein:
said step of selectively coupling includes electronically deflecting a reflective member having a concave portion defined in one surface thereof to reflect said light beam from said first optical fiber to said second optical fiber; and
the ends of said plurality of optical fibers are disposed so as to face said concave portion and lie on a circle the radius of which circle is substantially equal to the radius of curvature of said concave porion.

Claim 6. The method of Claim 4, wherein said step of selectively coupling comprises using a micromechanical light modulator.

FIG.1

FIG. 2

FIG.3